# EUROPEAN PATENT SPECIFICATION

(11) **EP 2 050 198 B1**
(45) Date of publication and mention of the grant of the patent: **04.07.2012**
(21) Application number: 06703627.7
(22) Date of filing: 24.01.2006
(51) Int. Cl.: H04B 1/40, H04B 7/185

(54) **APPARATUS AND METHOD FOR SATELLITE COMMUNICATION INSTALLED IN TERRESTRIAL PORTABLE PHONE AND SIMILAR GROUND TERMINAL**
IN MOBILTELEFON UND ÄHNLICHEN BODENENDGERÄTEN INSTALLIERTE VORRICHTUNG UND VERFAHREN FÜR SATELLITENKOMMUNIKATION
APPAREIL ET PROCEDE DESTINES A DES COMMUNICATIONS PAR SATELLITE INSTALLES DANS UN TELEPHONE PORTABLE TERRESTRE ET DANS UN TERMINAL TERRESTRE ANALOGUE

(30) Priority: 26.01.2005 KR 20050007044
(43) Date of publication of application: 22.04.2009
(73) Proprietor: Asia Pacific Satellite-Communications Inc., Geumcheon-gu Seoul 153-768 (KR)
(72) Inventor: RYOO, Jang Soo,, Gyeonggi-do 464-895 (KR); CHO, Young Haeng,, Gyeonggi-do 463-901 (KR); KIM, Jung S.,, Seoul 156-724 (KR)
(74) Representative: Schumacher & Willsau
(86) International application number: PCT/KR2006/000261
(87) International publication number: WO 2006/080795

(56) References cited:
- EP-A1- 0 996 241
- EP-A2- 0 750 406
- WO-A1-99/53660
- WO-A1-02/091630
- JP-A- 08 070 262
- JP-A- 10 243 453
- JP-A- 2001 136 568
- US-A- 6 134 437

## Description

### Technical Field

This invention relates to a satellite communication apparatus for use in a mobile terminal and a method of operating the same, and more particularly, to a satellite communication module contained in a mobile terminal adopting a communication system such as CDMA (Code Division Multiple Access), GSM (Global System for Mobile communication), or TDMA (Time Division Multiple Access), allowing the mobile terminal to perform a communication with a satellite.

### Background Art

In general, a mobile terminal adopting a particular communication system, for example, one of CDMA, GSM and TDMA, is difficult to be compatible with a different mobile terminal adopting a different communication system, and is usable only within coverage of base stations that interconnect communication networks. However, from a technical point of view, the base stations enabling communications between mobile terminals are difficult to be installed in places other than land, for example, sea, sky, mountains, etc. Also, from an economic point of view, the base stations are difficult to be installed in lightly populated areas on marketing characteristics of mobile terminals.

Accordingly, there arises a need for a satellite communication apparatus contained in a mobile terminal, which enables communication all over the world including sea, sky, mountains, etc. as well as coverage areas of existing mobile terminals by using wide coverage of satellites.
WO 02/091630 A1 describes a multi-mode communication device. The multi-mode communication device comprises a terrestrial mode transceiver and a satellite communication transceiver. These two transceivers allow for selective communication with a terrestrial base station or with a satellite. Additionally, the communication device comprises a GPS-module to determine a position of the multi-mode communication device.
EP 0 996 241 A1 describes a mobile communication system comprising a portable telephone usable for automatically switching a ground communication system and a satellite communication system.
EP 0 750 406 A2 describes a satellite and terrestrial cellular integrated mobile communication system in which accesses to a satellite mobile communication system can be made by using a mobile terminal for a terrestrial mobile communication system. The described system uses a dual mode mobile terminal device formed by a child station capable of making communications through the terrestrial mobile communication system, and a parent station having a satellite mobile terminal function and a terrestrial base station function.
WO 99/53660 A1 describes a dual-mode receiver for receiving satellite and terrestrial signals in a digital broadcast system, wherein the broadcast system overcomes obstructions to line of sight satellite signal reception at fixed and mobile radio receivers by employing one or more terrestrial repeaters.

### Disclosure of Invention

### Technical Problem

It is therefore an object of the present invention to provide an alternative satellite communication apparatus contained in a mobile terminal, which allows the mobile terminal to perform a communication with a satellite.

### Technical Solution

In order to accomplish the above object, it is provided a method of performing a satellite communication in a mobile terminal of a synchronous or asynchronous system, the mobile terminal being equipped with a land communication apparatus for land communication, wherein the mobile terminal contains a satellite communication apparatus comprising a satellite antenna and a satellite communication module for performing direct communication with a satellite, the method comprising the steps of: a first step of interfacing between the satellite communication apparatus and the land communication apparatus such that predetermined signals are transmitted/received between the satellite communication apparatus and the land communication apparatus; and a second step of performing the satellite communication according to the signals transmitted/received between the satellite communication apparatus and the land communication apparatus through the interfacing.

Also, the present invention provides a satellite communication apparatus having a satellite antenna for transmitting/receiving a high frequency satellite signal to/from a satellite contained in a mobile terminal, comprising: a high frequency processing unit for receiving the high frequency satellite signal, converting the received high frequency satellite signal into an intermediate frequency signal, converting the intermediate frequency signal into a baseband signal, converting a baseband signal into an intermediate frequency signal, and converting the intermediate frequency signal into a high frequency satellite signal; a signal processing integrated circuit unit for transmitting the baseband signal input from the high frequency processing unit, generating the baseband signal through modulation, outputting the generated baseband signal to the high frequency processing unit, and maintaining a communication channel frequency through a PLL logic part; a GPS unit for receiving a satellite signal from a GPS satellite and providing position and time information; and a main processing unit for demodulating the baseband signal input from the signal processing integrated circuit unit, performing a channel decoding process and a message decoding process for the demodulated baseband signal, generating predetermined format data according to a protocol related to satellite communication, performing a channel coding process for the generated format data, outputting the format data to the signal processing integrated circuit unit, outputting a timing control signal based on the position and time information input from the GPS unit in order to transmit the format data according to time slots, and managing a call process related to the satellite communication.

Also, it is provided a satellite communicating method of a satellite communication apparatus having a satellite communication module comprising a satellite antenna for performing direct communication with a satellite, a high frequency processing unit for converting a satellite signal, a signal processing integrated circuit unit for maintaining a communication channel frequency, a GPS unit for receiving a satellite GPS signal, and a main processing unit for managing a call process related to satellite communication, the method comprising the steps of:

by the satellite antenna, directly receiving a high frequency satellite signal transmitted from the satellite; by the high frequency processing unit, converting the received high frequency satellite signal into an intermediate frequency signal, converting the intermediate frequency signal into a baseband signal, converting a baseband signal into an intermediate frequency signal, and converting the intermediate frequency signal into a high frequency satellite signal; by the signal processing integrated circuit unit, transmitting the baseband signal input from the high frequency processing unit to the main processing unit, generating the baseband signal through modulation, outputting the generated baseband signal to the high frequency processing unit, and maintaining the communication channel frequency through a PLL logic part; by the GPS unit, receiving a satellite signal from a GPS satellite and providing position and time information to the main processing unit; and by the main processing unit, demodulating the baseband signal input from the signal processing integrated circuit unit, performing a channel decoding process and a message decoding process for the demodulated baseband signal, generating predetermined format data according to a protocol related to satellite communication, performing a channel coding process for the generated format data, outputting the format data to the signal processing integrated circuit unit, outputting a timing control signal based on the position and time information input from the GPS unit in order to transmit the format data according to time slots, and managing a call process related to the satellite communication.

### Advantageous Effects

The satellite communication module of the present invention can be contained in or interfaces with any forms of mobile terminals (end products, boards, modules, etc). In addition, the satellite communication module can be used according to communication system of the mobile terminals in areas where a communication network such as a base station exists. Furthermore, even in areas where there exists no communication network, as long as the satellite communication module is contained in the mobile terminals, the mobile terminals can communicate with a satellite all over the world, overcoming limitations of land loaming services of the mobile terminals.

### Brief Description of the Drawings

Fig. 1 is a view illustrating an internal configuration of a conventional mobile terminal;

Fig. 2 is a view illustrating an internal configuration ofa mobile terminal containing a satellite communication apparatus in accordance with an embodiment of the present invention;

Fig. 3 is a view illustrating an internal configuration of a satellite communication apparatus in accordance with an embodiment of the present invention;

Fig. 4 is a view illustrating configuration of a high frequency processing unit within a satellite communication module in a satellite communication apparatus in accordance with an embodiment of the present invention;

Fig. 5 is a conceptual view illustrating miniaturization of a satellite communication apparatus in accordance with an embodiment of the present invention; and

Fig. 6 is a view illustrating configuration of a signal processing integrated circuit unit in a satellite communication apparatus in accordance with en embodiment of the present invention.

### Mode for the Invention

Hereinafter, preferred embodiments of the present invention will be described in detail with reference to the accompanying drawings. In the following description, it should be noted that only portions necessary to understand operations of the present invention will be described and other portions will be omitted in order not to make the description of the present invention unclear.

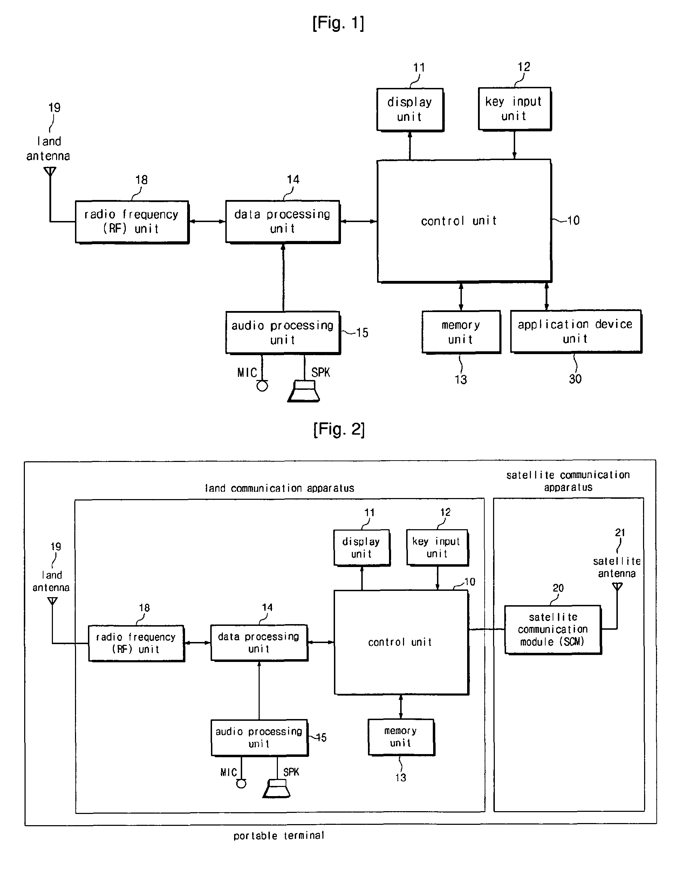

Fig. 1 is a view illustrating an internal configuration of a conventional mobile terminal. The reason for explaining the conventional mobile terminal of Fig. 1 is that it assists in understanding connection and interface between a satellite communication module (SCM), which is to be suggested in the present invention, and a mobile terminal. Here, the mobile terminal uses a land communication network employing a communication system such as CDMA, GSM, TDMA, etc. In addition, a radio communication network includes both of synchronous and asynchronous communication systems. A satellite communication apparatus suggested in the present invention is composed of a satellite communication module and a satellite antenna.

Referring to Fig. 1, a radio frequency unit 18 performs communication of a mobile terminal. The radio frequency unit 18 includes an RF transmitter for amplifying a transmitting signal and up-converting a frequency of the amplified signal, an RF receiver for low noise-amplifying a receiving signal and down-converting a frequency of the low-noise amplified signal, etc. Here, a land antenna 19 communicating with a base station is a land antenna of a mobile terminal used in common.

A data processing unit 14 includes a transmitter for encoding and modulating the transmitting signal, a receiver for demodulating and decoding the receiving signal, etc. The data processing unit 14 may be composed of a modem and a codec.

An audio processing unit 15 performs a function of reproducing a receiving audio signal output from the data processing unit 14 or transmitting a transmitting audio signal generated by a microphone to the data processing unit 14. A key input unit 12 includes keys for inputting numbers and characters and functional keys for setting various functions. A memory unit 13 may be composed of a program memory and data memory. In the program memory may be stored programs for controlling a general operation of the mobile terminal. In the data memory may be temporarily stored data produced in the course of execution of the programs.

A control unit 10 performs a function of controlling an overall operation of the mobile terminal and may contain the data processing unit 14. In this embodiment, the controller 10 can control a display unit 11, the key input unit 12, a microphone, a speaker, etc. by controlling signals transmitted from the satellite communication apparatus. The display unit may be implemented by, for example, a liquid crystal display (LCD), and can display information such as characters, numbers, images, etc., under control of the controller 10.

An application device unit 30 may include various application modules providing various functions to the mobile terminal, such as a camera module, a blue-tooth module, etc.

Fig. 2 is a view illustrating an internal configuration of a mobile terminal composed of a land communication apparatus and a satellite communication apparatus, in accordance with an embodiment of the present invention. That is, Fig. 2 shows the configuration where a satellite communication apparatus for performing a satellite communication is further contained in the existing mobile terminal as described earlier. Hereinafter, connection and interface between the satellite communication and the mobile terminal will be described with reference to Fig. 2.

Referring to Fig. 2, the mobile terminal may be configured by the unit of module. For example, the mobile terminal employing a GSM communication system may be implemented as the mobile terminal shown in Fig. 1 using a GSM module. In addition, the mobile terminal employing a CDMA or TDMA communication system may be implemented as the mobile terminal shown in Fig. 1 using a CDMA or TDMA module. In this case, as long as the mobile terminal has a connector connecting the mobile terminal to the satellite communication module 20 irrespective of a form of general board or a form of module (GSM, CDMA, TDMA, etc), the mobile terminal may be connected to any form of board or module. In this case, as one example of the connector, a board-to-board (B2B) connector having at least one pin may be used.

Signals must be transmitted/received between the mobile terminal and the satellite communication module connected thereto. In this case, as an interface for such connection, GPIO, MCSI, UART, IWA, etc. may be used. In addition, the satellite communication module 20 uses a satellite antenna 21 for transmitting/receiving high frequency satellite signals, which may be of an internal type or an external type.

Next, a method in which the mobile terminal employing a synchronous or asynchronous communication system communicates with a satellite using the satellite communication module connected to the mobile terminal and having a satellite antenna that conducts a direct communication with the satellite will be described.

Referring to Fig. 2, the mobile terminal is connected to the satellite communication module 20 having the satellite antenna 21 that conducts a direct communication with the satellite by using the above-mentioned connector. The satellite communication module connected to the mobile terminal interfaces with the mobile terminal so that signals can be transmitted/received between the mobile terminal and the satellite communication module. A method for such connection and interface has been described earlier.

It is possible for the mobile terminal to communicate with the satellite through the interface between the mobile terminal and the satellite communication module 20. The satellite antenna 21 receives a high frequency satellite signal from the satellite and transmits the received satellite signal to the satellite communication module 20. Here, the high frequency satellite signal is a signal of an L band, S band, Ku band, Ka band, etc., transmitted from a geostationary orbit-satellite, a middle earth orbit-satellite or a low earth orbit-satellite, including voice, data, fax, packet, etc. In addition, the satellite antenna 21 is an antenna for conducting a direct communication with the geostationary orbit-satellite, the middle earth orbit-satellite or the low earth orbit-satellite.

The satellite communication module 20 converts a signal received from the satellite antenna 21 into a signal to interface with the mobile terminal and transmits it to the mobile terminal. The control unit 10 of the mobile terminal receives the signal to interface with the mobile terminal from the satellite communication module 20, recognizes the received signal as a signal received from a land communication network, and controls the mobile terminal based on the received signal. For example, assuming the high frequency satellite signal is a voice signal, the control unit 10 controls the data processing unit 14 and the audio processing unit 15 to reproduce voice through a speaker SPK. On the other hand, if the control unit 10 recognizes that a voice signal is input to the mobile terminal from a microphone MIC, when the voice signal is transmitted to the satellite communication module 20 through the data processing unit 14 and the audio processing unit 15, the satellite communication module 20 converts the transmitted voice signal into a satellite signal to interface with the satellite and then transmits the satellite signal to the satellite through the satellite antenna 21.

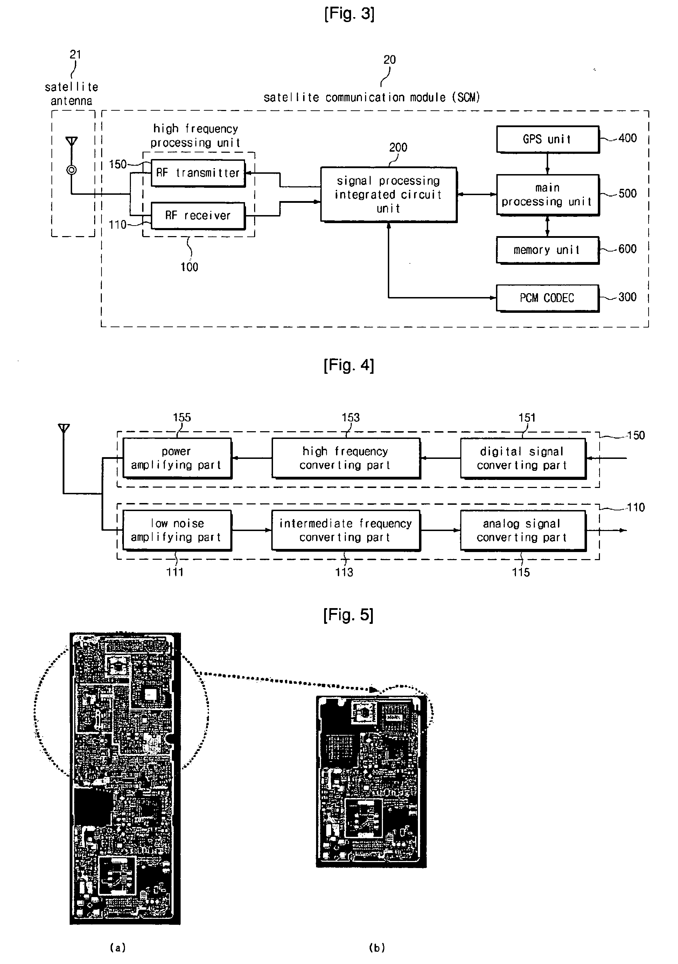

Fig. 3 is a view illustrating an internal configuration of the satellite communication apparatus in accordance with an embodiment of the present invention.

As shown in Fig. 3, the satellite communication in accordance with the embodiment of the present invention is composed of the satellite antenna and the satellite communication module 20. The satellite communication module 20 includes a high frequency processing unit 100, a signal processing integrated circuit unit 200, a PCM (Pulse Code Modulation) codec 300, a GPS (Global Positioning System) unit 400, a main processing unit 500 and a memory unit 600. Although the satellite communication module 20 of the present invention is contained in the mobile terminal, it may be implemented as a stand-alone type or may be implemented in a satellite-related receiving apparatus such as a set-top box (STB).

Referring to Fig. 3, the high frequency processing unit 100 includes an RF receiver 110 for converting a high frequency satellite signal received from a satellite into an intermediate frequency signal and then converting the intermediate frequency signal into an I/Q (In phase/Quadrature phase) signal, which is a digital signal of baseband, and an RF transmitter 150 for converting the I/Q signal into an intermediate frequency signal and then converting the intermediate frequency signal into a high frequency satellite signal. In this case, a frequency of the high frequency signal received from the satellite to the RF receiver 110 is in a range of 1525MHz to 1559MHz, and a frequency of the high frequency signal transmitted from the RF transmitter 150 to the satellite is in a range of 1626.5MHz to 1660.5MHz. In this manner, the high frequency processing unit 100 of the present invention transmits/receives a frequency signal of L band, but it may transmit/receive frequency signals of other bands such as S band, Ka band, Ku band, etc.

The signal processing integrated circuit unit 200 performs operations of matched filtering for the I/Q signal input from the RF receiver 110 of the high frequency processing unit 100, generation of the I/Q signal through modulation of transmission data (voice data, text data, fax data, multimedia data, etc) to satisfy satellite communication standards, maintenance of system reference timing and communication channel frequency, control of power of the high frequency processing unit 100, interfacing with a SIM (Subscriber Identity Module) card, and processing of the voice data with compressed PCM data.

PCM codec 300 generates the PCM data through sampling, quantizing and coding of a voice analog signal input through the microphone and decodes the generated PCM data into an analog to be output through the speaker. The satellite communication module 20 is of a stand-alone type and uses the PCM codec 300 when the speaker and the microphone are implemented.

The GPS unit 400 receives a satellite signal from a GPS satellite to provide position and time information to the mobile terminal. In this case, the position and time information serve as time synchronization in a satellite TDMA system.

The main processing unit 500 demodulates the I/Q signal input from the signal processing integrated circuit unit 200, performs a channel decoding process and a message decoding process for the demodulated I/Q signal, generates a data format according to a protocol related to the satellite communication, performs a channel coding process for the generated data format, and outputs the data format to the signal processing integrated circuit unit 200. The main processing unit 500 controls a timing based on the accurate position and time information input from the GPS unit 400 for TDM (Time Division Multiplex) in which data are divided into a plurality of time slots, and manages a call process.

The memory unit 600 stores data and programs required for the operation of the satellite communication module of the present invention.

Fig. 4 is a view illustrating configuration of the high frequency processing unit within the satellite communication module in the satellite communication apparatus in accordance with an embodiment of the present invention.

The RF receiver 110 includes a low noise amplifying part 111, an intermediate frequency converting part 113 and an analog signal converting part 115.

The low noise amplifier 111 including an LNA (Low Noise Amplifier) amplifies a high frequency satellite signal of low power level, which is received through the antenna, with minimized noise.

The intermediate frequency converting part 113 including an RF/IF (Radio Frequency/Intermediate Frequency Converter) converts the high frequency satellite signal output from the low noise amplifying part 111 into an intermediate frequency signal.

The analog signal converting part 115 converts the intermediate frequency signal output from the intermediate frequency converting part 113 into an I signal and a Q signal, which are digital signals.

The RF transmitter 150 includes a digital signal converting part 151, a high frequency converting part 153 and a power amplifying part 155.

The digital signal converting part 151 including an IF converter converts the digital I signal and Q signal generated according to modulation into an intermediate frequency signal, which is an analog signal.

The high frequency converting part 153 including an IF/RF converter converts the intermediate frequency signal transmitted from the digital signal converting part 151 into a high frequency satellite signal.

The power amplifying part 155 including a power amplifier (PA) amplifies the high frequency satellite signal output from the high frequency converting part 153 such that the high frequency satellite signal can be transmitted to the satellite.

The high frequency processing unit 100 of the present invention is implemented by a monolithic microwave integrated circuit (MMIC). The MMIC is a circuit wherein semiconductor devices, various passive elements and parts are integrated at a time on one silicon or GaAs substrate. Like this, since the high frequency processing part 100 is implemented by the MMIC, as shown in (b) of Fig. 5, it has small size and thus can be modularized (miniaturized), as compared to a high frequency processing unit 100 as shown in (a) of Fig. 5.

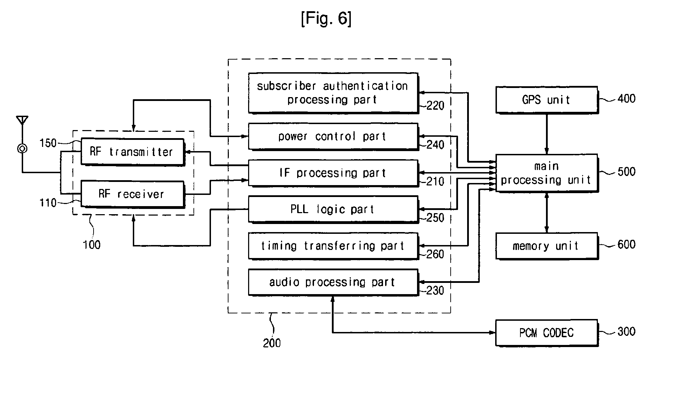

Fig. 6 is a view illustrating configuration of the signal processing integrated circuit unit in the satellite communication apparatus in accordance with an embodiment of the present invention. The signal processing integrated circuit unit 200 of the present invention includes an IF processing part 210, a subscriber authentication processing part 220, an audio processing part 230, a power control part 240, a PLL (Phase Locked Loop) logic part 250, and a timing transferring part 260.

The IF processing part 210 performs a matched filtering process and a modulating process for the I/Q signal input from the RF receiver 110 and outputs the processed I/Q signal to the RF transmitter 150. The modulation performed by the IF processing part 210 is digital modulation such as QPSK (Quadrature Phase Shift Keying), CQPSK (Compatible Quadrature Phase Shift Keying), BPSK (Binary Phase Shift Keying), etc.

The PLL logic part 250 performs a PLL operation for maintaining a reference frequency required for system reference timing, high frequency conversion and intermediate frequency conversion.

The subscriber authentication processing part 220 interfaces subscriber information such as an identification number, an account number, a registered telephone number, etc. stored in a SIM card.

The audio processing part 230 compresses PCM data generated through sampling, quantizing and coding processes for voice, converts the compressed PCM data into voice data, decodes the compressed voice data into a PCM signal to generate an analog voice signal.

The power control part 240 controls power consumption using a timing control such that the signal processing integrated circuit unit 200 operates only for a period of time when the transmission/receipt of the high frequency processing unit 100 is performed.

The timing transferring part 260 transfers a timing control signal, which is output from the main processing unit 500, to the high frequency processing unit 100, for TDMA communication with the satellite.

The signal processing integrated circuit unit 200 constructed as above is implemented by a ASIC (Application Specific Integrated Circuit), and thus, the satellite communication apparatus of the present invention can be modularized (miniaturized).

Next, detailed operation of the satellite communication module of the present invention will be described with reference to Fig. 6.

First, the main processing unit 500 outputs the timing control signal based on the position and time information output from the GPS unit 400, and the power control part 240 of the signal processing integrated circuit unit 200 supplies power to the high frequency processing unit 100 according to the timing control signal.

The RF receiver 110 of the high frequency processing unit 100 supplied with the power receives the high frequency satellite signal from the satellite, converts the received high frequency satellite signal into the intermediate frequency signal, and then converts the intermediate frequency signal into the digital I/Q signal. In this case, the operation of the RF receiver 110 is performed using the reference frequency maintained by the PLL logic part 250.

The RF receiver 110 outputs the I/Q signal to the signal processing integrated circuit unit 200, and the IF processing part 210 of the signal processing integrated circuit unit 200 performs the matched filtering process for the input I/Q signal to generate an accurate I/Q signal and then outputs the accurate I/Q signal to the main processing unit 500.

The main processing part 500 demodulates the matched filtered I/Q signal received from the IF processing part 210 into original data and performs the channel decoding process for the original data to detect and correct data errors for further process. In this case, the main processing unit 500 outputs compressed voice data to the audio processing part 230 of the signal processing integrated circuit unit 200.

The audio processing part 230 received the voice data from the main processing unit 500 decompresses the compressed voice data to generate the PCM signal, converts the PCM signal into the analog voice signal, and then outputs the analog voice signal to the speaker.

In the mean time, the main processing unit 500 generates the transmission data of a specified format according to the protocol related to the satellite communication, performs the channel coding process for the transmission data, and outputs the processed transmission data to the signal processing integrated circuit unit 200. In this case, the PCM codec 300 converts the analog voice signal input through the microphone into the PCM signal through the sampling, quantizing and coding processes for the voice analog signal and outputs the PCM signal to the main processing unit 500. The main processing unit 500 converts the PCM signal into transmission data of a specified format according to the protocol related to the satellite communication, and outputs performs a channel coding process for the transmission data, and outputs the processed transmission data to the signal processing integrated unit 200.

The IF processing part 210 of the signal processing integrated circuit unit 200 modulates the channel-coded transmission data received from the main processing unit 500 into the I/Q signal and outputs the I/Q signal to the RF transmission part 150 of the high frequency processing unit 100.

The main processing unit 500 outputs the timing control signal based on the position and time information output from the GPS unit 400, and the power control part 240 of the signal processing integrated circuit unit 200 supplies power to the RF transmitter 150 of the high frequency processing unit 100 according to the timing control signal.

When the power is supplied to the RF transmitter 150, the RF transmitter 150 converts the I/Q signal output from the signal processing integrated circuit unit 200 into the intermediate frequency signal, converts the intermediate frequency signal into the high frequency satellite signal of a specified band, and transmits the high frequency satellite signal to the satellite. In this case, the operation of the RF transmitter 150 is performed using the reference frequency maintained by the PLL logic part 250.

In the satellite communication module of the present invention that operates as described above, the high frequency processing unit 100 and the signal processing integrated circuit unit 200 are implemented by forms of MMIC and ASIC, respectively. Accordingly, since the miniaturization of the high frequency processing unit 100 and the signal processing integrated circuit unit 200 can be achieved, it is pos sible to provide a modularized satellite communication module contained in a mobile terminal.

While the present invention has been particularly shown and described with reference to exemplary embodiments thereof, it will be understood by those skilled in the art that various changes in form and details may be made therein without departing from the scope of the present invention. Therefore, the scope of the present invention should not be interpreted to be limited to the illustrated embodiments, but should be defined by the appended claims and equivalents thereof.

## Claims

1. A satellite communication apparatus having a satellite antenna (21) for transmitting/receiving a high frequency satellite signal *to*/from a satellite contained in a mobile terminal, comprising:
a high frequency processing unit (100) for receiving the high frequency satellite signal, converting the received high frequency satellite signal into an intermediate frequency signal, converting the intermediate frequency signal into a baseband signal, converting a baseband signal into an intermediate frequency signal, and converting the intermediate frequency signal into a high frequency satellite signal;
a signal processing integrated circuit unit (200) for transmitting the baseband signal input from the high frequency processing unit (100), generating the baseband signal through modulation, outputting the generated baseband signal to the high frequency processing unit (100), and maintaining a communication channel frequency through a PLL logic part (250);
a GPS unit (400) for receiving a satellite signal from a GPS satellite and providing position and time information; and
a main processing unit (500) for demodulating the baseband signal input from the signal processing integrated circuit unit (200), performing a channel decoding process and a message decoding process for the demodulated baseband signal, generating predetermined format data according to a protocol related to satellite communication, performing a channel coding process for the generated format data, outputting the format data to the signal processing integrated circuit unit (200), and managing a call process related to the satellite communication, **characterized in that** the main processing unit (500) is arranged to output a timing control signal based on the position and time information input from the GPS unit (400) in order to transmit the format data according to time slots.

2. The satellite communication apparatus according to claim 1, wherein a frequency band of the signal transmitted/received by the high frequency processing unit (100) is an L band.

3. The satellite communication apparatus according to claim 1, wherein a frequency band of the signal transmitted/received by the high frequency processing unit (100) is a S band.

4. The satellite communication apparatus according to claim 1, wherein the signal processing integrated circuit unit (200) interfaces with a SIM card.

5. The satellite communication apparatus according to claim 1, wherein the high frequency processing unit (100) is implemented by a monolithic microwave integrated circuit.

6. The satellite communication apparatus according to claim 1, wherein the signal processing integrated circuit unit (200) is implemented by an application specific integrated circuit.

7. A satellite communicating method of a satellite communication apparatus having a satellite communication module (20) comprising a satellite antenna (21) for performing direct communication with a satellite, a high frequency processing unit (100) for converting a satellite signal, a signal processing integrated circuit unit (200) for maintaining a communication channel frequency, a GPS unit (400) for receiving a satellite GPS signal, and a main processing unit (500) for managing a call process related to satellite communication, the method comprising the steps of:
by the satellite antenna (21), directly receiving a high frequency satellite signal transmitted from the satellite;
by the high frequency processing unit (100), converting the received high frequency satellite signal into an intermediate frequency signal, converting the intermediate frequency signal into a baseband signal, converting a baseband signal into an intermediate frequency signal, and converting the intermediate frequency signal into a high frequency satellite signal;
by the signal processing integrated circuit unit (200), transmitting the baseband signal input from the high frequency processing unit (100) to the main processing unit (500), generating the baseband signal through modulation, outputting the generated baseband signal to the high frequency processing unit (100), and maintaining the communication channel frequency through a PLL logic part (250);
by the GPS unit (400), receiving a satellite signal from a GPS satellite and providing position and time information to the main processing unit (500); and
by the main processing unit (500), demodulating the baseband signal input from the signal processing integrated circuit unit (200), performing a channel decoding process and a message decoding process for the demodulated baseband signal, generating predetermined format data according to a protocol related to satellite communication, performing a channel coding process for the generated format data, outputting the format data to the signal processing integrated circuit unit (200), and managing a call process related to the satellite communication
**characterized in that** the main processing unit (500) outputs a timing control signal based on the position and time information input from the GPS unit (400) in order to transmit the format data according to timeslots.

## Patentansprüche

1. Satellitenkommunikationsvorrichtung mit einer Satellitenantenne (21) zum Senden/Empfangen eines Hochfrequenzsatellitensignals an einen/von einem Satelliten, die in einem mobilen Endgerät enthalten ist und aufweist:
eine Hochfrequenzverarbeitungseinheit (100) zum Empfangen des Hochfrequenzsatellitensignals, Umwandeln des empfangenen Hochfrequenzsatellitensignals in ein Zwischenfrequenzsignal, Umwandeln des Zwischenfrequenzsignals in ein Basisbandsignal, Umwandeln eines Basisbandsignals in ein Zwischenfrequenzsignal und Umwandeln des Zwischenfrequenzsignals in ein Hochfrequenzsatellitensignal;
eine Signalverarbeitungseinheit (200) mit integriertem Schaltkreis, zum Senden des von der Hochfrequenzverarbeitungseinheit (100) eingegebenen Basisbandsignals, Erzeugen des Basisbandsignals durch Modulation, Ausgeben des erzeugten Basisbandsignals an die Hochfrequenzverarbeitungseinheit (100) und Aufrechterhalten einer Kommunikationskanalfrequenz durch einen PLL-Logikteil (250);
eine GPS-Einheit (400) zum Empfangen eines Satellitensignals von einem GPS-Satelliten und Bereitstellen von Positions- und Zeitinformationen; und
eine Hauptverarbeitungseinheit (500) zum Demodulieren des von der Signalverarbeitungseinheit (200) mit integriertem Schaltkreis eingegebenen Signals, Ausführen eines Kanaldekodierprozesses und eines Nachrichtdekodierprozesses für das demodulierte Basisbandsignal, Erzeugen vorbestimmter Formatdaten in Übereinstimmung mit einem Protokoll, welches Satellitenkommunikation betrifft, Ausführen eines Kanalkodierprozesses für die erzeugten Formatdaten, Ausgeben der Formatdaten an die Signalverarbeitungseinheit (200) und Durchführen eines Rufprozesses, der die Satellitenkommunikation betrifft, **dadurch gekennzeichnet, dass** die Hauptverarbeitungseinheit (500) dazu eingerichtet ist, ein Zeitsteuersignal auf der Grundlage der von der GPS-Einheit (400) eingegebenen Positions- und Zeitinformationen auszugeben, um die Formatdaten in Übereinstimmung mit Zeitschlitzen zu senden.

2. Satellitenkommunikationsvorrichtung nach Anspruch 1, wobei ein Frequenzband des von der Hochfrequenzverarbeitungseinheit (100) ausgesandten/empfangenen Signals ein L-Band ist.

3. Satellitenkommunikationsvorrichtung nach Anspruch 1, wobei ein Frequenzband des von der Hochfrequenzverarbeitungseinheit (100) ausgesandten/empfangenen Signals ein S-Band ist.

4. Satellitenkommunikationsvorrichtung nach Anspruch 1, wobei die Signalverarbeitungseinheit (200) mit integriertem Schaltkreis über eine Schnittstelle mit einer SIM-Karte verbindbar oder verbunden ist.

5. Satellitenkommunikationsvorrichtung nach Anspruch 1, wobei die Hochfrequenzverarbeitungseinheit (100) durch einen monolithischen integrierten Mikrowellenschaltkreis realisiert ist.

6. Satellitenkommunikationsvorrichtung nach Anspruch 1, wobei die Signalverarbeitungseinheit (200) mit integriertem Schaltkreis durch einen anwendungsspezifischen integrierten Schaltkreis realisiert ist.

7. Satellitenkommunikationsverfahren einer Satellitenkommunikationsvorrichtung, die aufweist: ein Satellitenkommunikationsmodul (20) mit einer Satellitenantenne (21) zum Durchführen einer Direktkommunikation mit einem Satelliten, eine Hochfrequenzverarbeitungseinheit (100) zum Umwandeln eines Satellitensignals, eine Signalverarbeitungseinheit (200) mit integriertem Schaltkreis zum Aufrechterhalten einer Kommunikationskanalfrequenz, eine GPS-Einheit (400) zum Empfangen eines Satelliten GPS-Signals und eine Hauptverarbeitungseinheit (500) zum Durchführen eines Rufprozesses, der Satellitenkommunikation betrifft, wobei das Verfahren die folgenden Schritte aufweist:
mittels der Satellitenantenne (21) wird ein von dem Satelliten ausgesandtes Hochfrequenzsatellitensignal direkt empfangen;
mittels der Hochfrequenzverarbeitungseinheit (100) wird das empfangene Hochfrequenzsatellitensignal in ein Zwischenfrequenzsignal umgewandelt, das Zwischenfrequenzsignal wird in ein Basisbandsignal umgewandelt, ein Basisbandsignal wird in ein Zwischenfrequenzsignal umgewandelt und das Zwischenfrequenzsignal wird in ein Hochfrequenzsatellitensignal umgewandelt,
mittels der Signalverarbeitungseinheit (200) mit integriertem Schaltkreis wird das von der Hochfrequenzverarbeitungseinheit (100) eingegebene Basisbandsignal an die Hauptverarbeitungseinheit (500) gesendet, das Basisbandsignal wird durch Modulation erzeugt, das erzeugte Basisbandsignal wird an die Hochfrequenzverarbeitungseinheit (100) ausgegeben und die Kommunikationskanalfrequenz wird durch ein PLL-Logikteil (250) aufrechterhalten;
mittels der GPS-Einheit (400) wird ein Satellitensignal von einem GPS-Satelliten empfangen und Positions- und Zeitinformationen werden der Hauptverarbeitungseinrichtung (500) zur Verfügung gestellt;
mittels der Hauptverarbeitungseinrichtung (500) wird das von der Signalverarbeitungseinheit (200) mit integriertem Schaltkreis eingegebene Basisbandsignal demoduliert, ein Kanaldekodierprozess und ein Nachrichtdekodierprozess werden für das demodulierte Basisbandsignal ausgeführt, vorbestimmte Formatdaten werden in Übereinstimmung mit einem Protokoll, welches Satellitenkommunikation betrifft, erzeugt, für die erzeugten Formatdaten wird ein Kanalkodierprozess durchgeführt, die Formatdaten werden an die Signalverarbeitungseinheit (200) mit integriertem Schaltkreis ausgegeben und ein die Satellitenkommunikation betreffender Prozess wird verwaltet;
**dadurch gekennzeichnet, dass** die Hauptverarbeitungseinrichtung (500) ein Zeitsteuersignal ausgibt, welches auf den von der GPS-Einheit (400) eingegebenen Positions- und Zeitinformationen beruht, um die Formatdaten in Übereinstimmung mit Zeitschlitzen zu senden.

## Revendications

1. Appareil de communication satellite, comportant une antenne satellite (21) pour émettre/recevoir un signal satellite haute fréquence vers/d'un satellite, contenu dans un terminal mobil, comportant:
une unité de traitement haute fréquence (100) pour recevoir le signal satellite haute fréquence, convertir le signal satellite haute fréquence reçu en un signal de fréquence intermédiaire, convertir le signal de fréquence intermédiaire en un signal en bande de base, convertir un signal en bande de base en un signal de fréquence intermédiaire et convertir le signal de fréquence intermédiaire en un signal satellite haute fréquence;
une unité circuit intégré de traitement de signal (200) pour émettre le signal en bande de base reçu de l'unité de traitement haute fréquence (100), générer le signal en bande de base par modulation, transmettre le signal en bande de base généré à l'unité de traitement haute fréquence (100) et maintenir une fréquence de canal de communication par une partie logique PLL (250);
une unité GPS (400) pour recevoir un signal satellite d'un satellite GPS et fournir des informations de position et de temps; et
une unité principale de traitement (500) pour démoduler le signal en bande de base reçu de l'unité circuit intégré de traitement de signal, effectuer un processus de décodage de canal et un processus de décodage de message pour le signal en bande de base démodulé, générer des données prédéterminées de format selon un protocole relatif à la communication satellite, effectuer un processus de codage de canal pour les données de format générées, passer les données de format à l'unité circuit intégré de traitement de signal (200) et gérer un processus d'appel relatif à la communication satellite, **caractérisé en ce que** l'unité principale de traitement (500) est adaptée à fournir un signal de contrôle de temps sur la base des informations de temps et de position reçues de l'unité GPS (400) afin de transmettre les données de format selon des créneaux temporels.

2. Appareil de communication satellite selon la revendication 1, dans lequel une bande de fréquences du signal émis/reçu par l'unité de traitement haute fréquence (100) est une bande L.

3. Appareil de communication satellite selon la revendication 1, dans lequel une bande de fréquences du signal émis/reçu par l'unité de traitement haute fréquence (100) est une bande S.

4. Appareil de communication satellite selon la revendication 1, l'unité circuit intégré de traitement de signal (200) étant ou pouvant être couplée à une carte SIM par une interface.

5. Appareil de communication satellite selon la revendication 1, l'unité de traitement haute fréquence (100) étant réalisée par un circuit intégré microonde monolithique.

6. Appareil de communication satellite selon la revendication 1, l'unité circuit intégré de traitement de signal (200) étant réalisée par un circuit intégré spécifique à l'application.

7. Procédé de communication satellite d'un appareil communication satellite comportant un module de communication satellite (20) comportant une antenne satellite (21) pour effectuer une communication directe avec un satellite, une unité de traitement haute fréquence (100) pour convertir un signal satellite, une unité circuit intégré de traitement de signal (200) pour maintenir une fréquence de canal de communication, une unité GPS (400) pour recevoir un signal GPS satellite et une unité principale de traitement (500) pour gérer un processus d'appel relatif à une communication satellite, la procédure comportant les étapes suivantes:
par l'antenne satellite (21), recevoir directement un signal satellite haute fréquence transmis par le satellite;
par l'unité de traitement haute fréquence (100), convertir le signal satellite haute fréquence reçu en un signal de fréquence intermédiaire, convertir le signal de fréquence intermédiaire en un signal en bande de base, convertir un signal en bande de base en un signal de fréquence intermédiaire et convertir le signal de fréquence intermédiaire en un signal satellite haute fréquence;
par l'unité de circuit intégré de traitement de signal (200), transmettre le signal en bande de base reçu de l'unité de traitement haute fréquence (100) à l'unité principale de traitement (500), générer le signal en bande de base par modulation, transmettre le signal en bande de base généré à l'unité de traitement haute fréquences et maintenir la fréquence de canal de communication par une partie logique PLL (250);
par l'unité GPS (400), recevoir un signal satellite par un satellite GPS et passer des informations de position et de temps à l'unité principale de traitement (500); et
par l'unité principale de traitement (500), démoduler le signal en bande de base reçu de l'unité circuit intégré de traitement de signal (200), effectuer un processus de décodage de canal et un processus de décodage de message pour le signal en bande de base démodulé, générer des données prédéterminées de format selon un protocole relatif à la communication satellite, effectuer un processus de codage de canal pour les données de format générées, passer les données de format à l'unité circuit intégré de traitement de signal (200) et gérer un processus d'appel relatif à la communication satellite;
**caractérisé en ce que** l'unité principale de traitement (500) fournit un signal de contrôle de temps sur la base des informations de position et de temps reçues de l'unité GPS (400) afin de transmettre les données de format selon des créneaux temporels.
